# EUROPEAN PATENT APPLICATION

(11) **EP 2 830 341 A1**
(43) Date of publication of application: **28.01.2015**
(21) Application number: 13764247.6
(22) Date of filing: 28.01.2013
(51) Int. Cl.: H04W 8/26, G08G 1/09, H04W 4/04

(54) **COMMUNICATION DEVICE, METHOD FOR SPECIFYING IDENTIFICATION INFORMATION FOR COMMUNICATION WITH COMMUNICATION PARTNER, AND RECORDING MEDIUM**

(30) Priority: 19.03.2012 JP 2012061664
(71) Applicant: NEC Corporation, Tokyo 108-8001 (JP)
(72) Inventor: YAMAMOTO, Takeshi, Tokyo 108-8001 (JP)
(74) Representative: Vossius & Partner
(86) International application number: PCT/JP2013/051749
(87) International publication number: WO 2013/140854

(57) **Abstract**

This communication device includes: communication means that receives from each of other communication devices identification information to enable communication with the other communication device and identification information for visual verification of the other communication device; storage means that stores, for each of the other communication devices, identification information to enable communication and identification information for visual verification received in said communication means, which are associated with each other; display means that displays the identification information for visual verification that was received by said communication means; acceptance means that accepts selected identification information that is a piece of identification information for visual verification that was selected from among pieces of identification information for visual verification that was displayed on said display means; and control means that specifies, as the identification information to enable communication with a communication partner, identification information to enable communication that is associated with said selected identification information in said storage means.

## Description

### Technical Field

The present invention relates to a communication device that performs wireless communication, a method of specifying identification information for communication with a communication partner, and a recording medium, and for example, relates to a communication device such as an onboard apparatus that communicates with another communication device that is mounted in a vehicle, a method of specifying identification information for communication with a communication partner, and a recording medium.

### Background Art

Inter-vehicle communication, i.e., communication between vehicles, is a known technology. In inter-vehicle communication, wireless communication is carried out among communication devices that are mounted in vehicles.

Patent Document 1 discloses a wireless data transceiver that carries out wireless communication by using IP (Internet Protocol) addresses as the identification information for communication of onboard communication devices. The wireless data transceiver described in Patent Document 1 uses the identification information to enable communication with a communication partner to identify the communication partner and perform one-to-one communication with the communication partner.

### Literature of the Prior Art

### Patent Documents

Patent Document 1: Japanese Patent No. 4296911

### Summary of the Invention

### Problem to be Solved by the Invention

The identification information to enable communication with a communication device that is used in inter-vehicle communication is at times altered to protect the privacy of the users of the communication devices.

As a result, when the identification information for communication (for example, an IP address) of a communication partner is altered, the wireless data transceiver described in Patent Document 1 becomes unable to identify the communication partner, and communication with the communication partner therefore becomes difficult.

The problem consequently arises that a method is needed for acquiring new identification information to enable communication with a communication partner.

It is an object of the present invention to provide a communication device, a method of identifying identification information to enable communication with a communication partner, and a recording medium that can solve the problems described above.

### Means for Solving the Problem

The communication device according to the present invention includes:
communication means that receives from each of other communication devices identification information to enable communication with the other communication device and identification information for visual verification of the other communication device;
storage means that stores, for each of the other communication devices, identification information to enable communication and identification information for visual verification, that were received in said communication means, and that are associated with each other;
display means that displays the identification information for visual verification that was received by said communication means;
acceptance means that accepts selected identification information that is a piece of identification information for visual verification that were selected from among pieces of identification information for visual verification that was displayed on said display means; and
control means that specifies, as the identification information to enable communication with a communication partner, identification information to enable communication that is associated with said selected identification information in said storage means.

The method of specifying identification information to enable communication with a communication partner according to the present invention is a method of specifying identification information to enable communication with a communication partner that is carried out by a communication device and includes:
receiving, from each of other communication devices, identification information to enable communication with the other communication device and identification information for visual verification of the other communication device;
storing in storage means for each of the other communication devices, identification information to enable communication and identification information for visual verification, that were received, and that are associated with each other;
displaying the identification information for visual verification that was received;
accepting selected identification information that is a piece of identification information for visual verification that was selected from among pieces of identification information for visual verification that was displayed; and
specifying, as the identification information to enable communication with a communication partner, identification information to enable communication that was associated with said selected identification information in said storage means.

The recording medium of the present invention is a recording medium that can be read by a computer and on which a program is recorded for causing a computer to execute:
a reception procedure of receiving from each of communication devices: identification information to enable communication with the communication device and identification information for visual verification of the communication device;
a storage procedure of storing, in storage means for each of the communication devices, identification information to enable communication and identification information for visual verification, that were received, and that are associated with each other;
a display procedure of displaying the identification information for visual verification that was received;
an acceptance procedure of accepting selected identification information that is a piece of identification information for visual verification that were selected from among pieces of identification information for visual verification that was displayed; and
a control procedure of specifying, as the identification information to enable communication with a communication partner, identification information to enable communication that was associated with said selected identification information in said storage means.

### Effect of the Invention

According to the present invention, new identification information to enable communication with a communication partner can be acquired.

### Brief Description of the Drawings

FIG. 1 is a block diagram showing communication device 100 of an exemplary embodiment of the present invention.
FIG. 2 shows an example of an example of a password in password storage unit 1.
FIG. 3 shows an example of IDs and position information in ID storage unit 5.
FIG. 4 shows an example of the display on display unit 6.
FIG. 5 is a sequence diagram for describing the operation of communication device 100.
FIG. 6 is a block diagram showing communication devices 100a and 100b.
FIG. 7 shows a communication device that is made up from communication unit 4, ID storage unit 5, display unit 6, touch panel 7, and control unit 8.

### Mode for Carrying Out the Invention

An exemplary embodiment according to the present invention is next described with reference to the accompanying drawings.

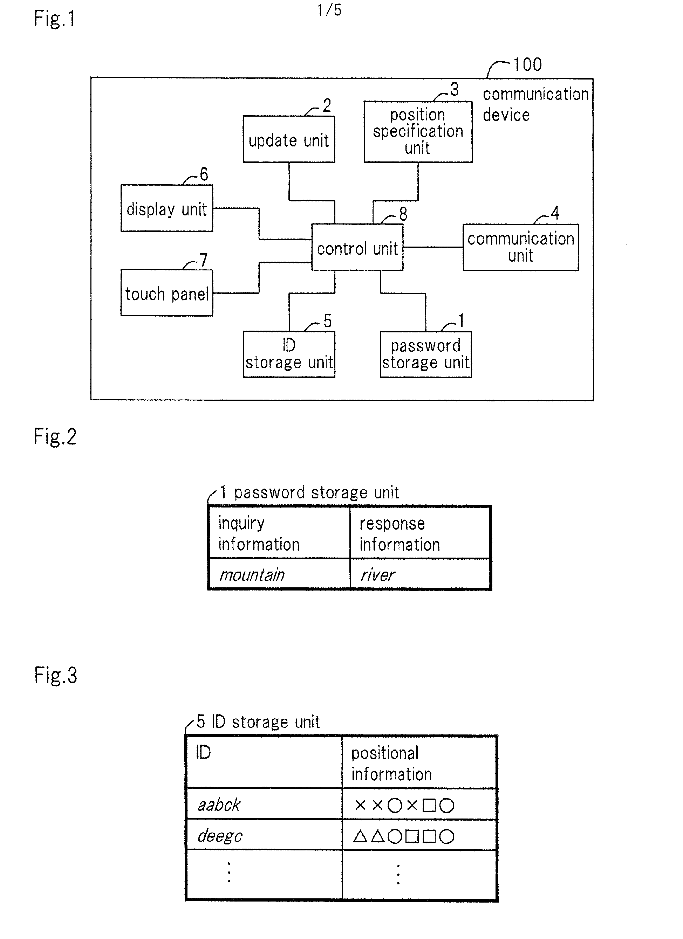

FIG. 1 is a block diagram showing communication device 100 of an exemplary embodiment according to the present invention.

Communication device 100 is, for example, mounted in a vehicle and performs inter-vehicle communication.

In FIG. 1, communication device 100 includes: password storage unit 1, update unit 2, position specification unit 3, communication unit 4, ID storage unit 5, display unit 6, touch panel 7, and control unit 8.

Password storage unit 1 is one example of storing means.

Password storage unit 1 stores inquiry information that shows a predetermined inquiry and response information that shows a response that corresponds to the inquiry. The inquiry information in password storage unit 1 is an example of predetermined inquiry information, and the response information in password storage unit 1 is an example of response information that corresponds to the predetermined inquiry information. The inquiry information and response information are hereinbelow together referred to as "password."

FIG. 2 shows an example of a password (inquiry information and response information) in password storage unit 1.

In FIG. 2, *"mountain,"* which is the inquiry information, and *"river,"* which is the response information that corresponds to the inquiry information *"mountain,"* are associated with each other. A password is not limited to a pair of character strings that make up inquiry information and response information, and for example, may also be a pair of number strings (for example, inquiry information *"0101025"* and response information *"1113728")* or can be modified as appropriate.

Update unit 2 is one example of update means.

Update unit 2 holds the identification information to enable communication (hereinbelow referred to as the "ID") with communication device 100, and further, updates the ID. Update unit 2 periodically updates ID (for example, every minute, every 30 minutes, or every hour). Update unit 2 may further update ID when the power-supply voltage is supplied to communication device 100. Update unit 2 holds the ID that is updated. ID is used to specify communication device 100 at the time of communication. ID is, for example, an IP address.

Position specification unit 3 generates positional information that indicates the position of communication device 100. Position specification unit 3, for example, uses a GPS (Global Positioning System) to periodically (for example, every minute) acquire the position of communication device 100 and generates positional information that indicates the position of communication device 100. The positional information is one example of the identification information for visual verification (predetermined identification information) of communication device 100. In addition, the timing of periodically acquiring the position of communication device 100 is not limited to every minute and can be modified as appropriate.

Communication unit 4 is one example of communication means.

Communication unit 4 communicates with each of other communication devices.

Communication unit 4 broadcast-transmits the most recent ID of communication device 100 and positional information (most recent positional information) indicating the position of communication device 100. In the present exemplary embodiment, communication unit 4 periodically (for example, every minute) broadcast-transmits the most recent ID of communication device 100 and the positional information of communication device 100.

The time interval of the broadcast transmission by communication unit 4 of the most recent ID of communication device 100 and the positional information of communication device 100 is not limited to one minute and can be modified as appropriate. In addition, when communication unit 4 receives a transmission request for requesting the transmission of the most recent ID from another communication device, communication unit 4 may broadcast-transmit the most recent ID of communication device 100 and the positional information of communication device 100.

In addition, communication unit 4 receives IDs of other communication device and the positional information of other communication device that are transmitted from each of the other communication devices.

ID storage unit 5 is one example of storage means.

ID storage unit 5 stores, for each of communication devices, the ID of other communication device and the positional information of other communication device, that were received in communication unit 4, and that are associated with each other.

FIG. 3 shows an example of the IDs and positional information in ID storage unit 5.

In FIG. 3, for example, ID = "aabck" and positional information = "××○×□○" are associated with each other. In addition, ID = "aabck" and positional information = "××○×□○" are the ID and positional information that were transmitted from a communication device that is at that position.

The IDs and positional information in ID storage unit 5 are deleted by, for example, control unit 8, after having been stored in ID storage unit 5 for a predetermined interval (for example, one minute). The predetermined time interval is not limited to one minute and can be modified as appropriate.

Display unit 6 is one example of display means.

Display unit 6 displays positional information that is received by communication unit 4. In the present exemplary embodiment, display unit 6 displays positional information on a map screen.

The map information that displays a map screen may be stored in, for example, password storage unit 1, or control unit 8 may use communication unit 4 to acquire the map information from an outside map server (not shown). In the present exemplary embodiment, the map information is assumed to be stored by password storage unit 1.

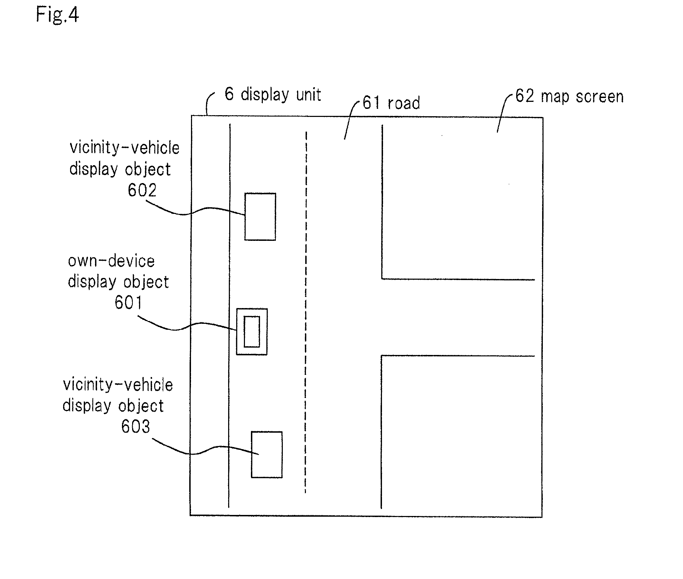

FIG. 4 shows an example of the display on display unit 6.

In FIG. 4, own-device display object 601, which is arranged at a position that is shown by the positional information of its own device, and vicinity-vehicle display objects 602 and 603, which are arranged at positions that are shown by the positional information of other communication devices, are shown on map screen 62 that shows road 61 on display unit 6. In addition, the display forms are different for own-device display object 601 and vicinity-vehicle display objects 602 and 603.

The position of own-device display object 601 is a position that is shown by the positional information of its own device, and the position of own-device display object 601 therefore means the positional information of its own device. The positions of vicinity-vehicle display objects 602 and 603 are each of positions that are indicated by the positional information of the other communication devices, and the positions of vicinity-vehicle display objects 602 and 603 therefore each mean positional information of other communication devices.

The user of communication device 100 compares the state of the vicinity vehicles, which the user actually visually checks, with the display on display unit 6, and selects the vicinity-vehicle display object that has the communication device that is the communication partner from among the vicinity-vehicle display objects, by touching the vicinity-vehicle display object.

Touch panel 7 is an example of acceptance means.

Touch panel 7 is arranged on the front surface of the display surface of display unit 6 and detects touching to the vicinity-vehicle display object by the user of communication device 100.

In the present exemplary embodiment, touch panel 7 receives the position of the vicinity-vehicle display object that was designated by touching, from among the vicinity-vehicle display, objects that are displayed on map screen 62 as selected positional information. The selected positional information is one example of the selected identification information.

Control unit 8 is one example of control means.

Control unit 8 controls the operation of communication device 100.

For example, control unit 8 specifies as the ID of the communication partner the ID that is placed in association with the selected identification information in ID storage unit 5.

In the present exemplary embodiment, control unit 8 uses the ID that is placed in association with the selected identification information in ID storage unit 5 to designate the communication destination, and moreover, produces an ID verification message that contains the inquiry information *"mountain"* in password storage unit 1. The ID verification message is one example of the identification information verification message. Control unit 8 transmits the ID verification message by way of communication unit 4.

Upon receiving an acknowledgement message that indicates acknowledgement as a response to the ID verification message (for example, an acknowledgement message that contains the response information *"river"* that corresponds to the inquiry information *"mountain")* by way of communication unit 4, control unit 8 specifies the ID that is placed in association with the selected positional information in ID storage unit 5 as the ID of the communication partner.

The operations are next described.

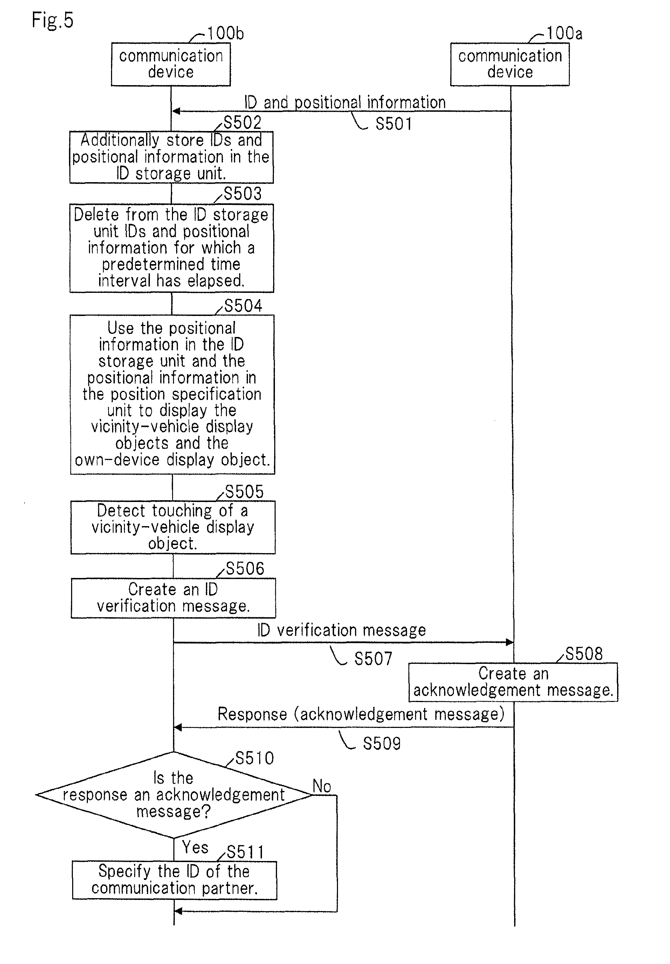

FIG. 5 is a sequence diagram for describing the operations of communication device 100. FIG. 5 shows the communication operations between two communication devices 100a and 100b. Communication devices 100a and 100b are assumed to have the same configuration as communication device 100 shown in FIG. 1.

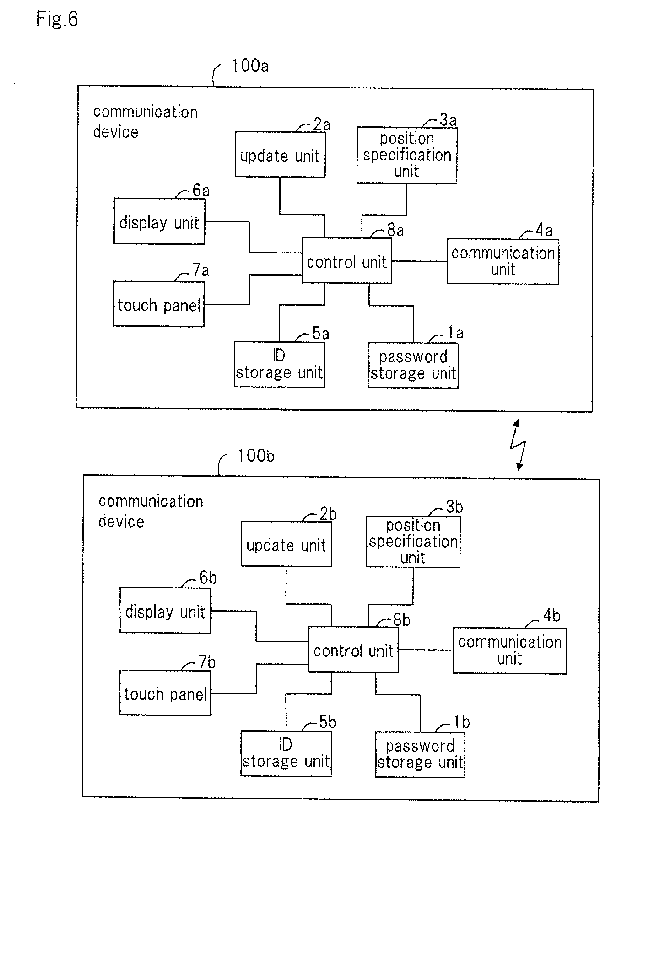

In the following explanation, password storage unit 1, update unit 2, position specification unit 3, communication unit 4, ID storage unit 5, display unit 6, touch panel 7, and control unit 8 in communication device 100a are referred to respectively as password storage unit 1 a, update unit 2a, position specification unit 3a, communication unit 4a, ID storage unit 5a, display unit 6a, touch panel 7a, and control unit 8a as shown in FIG. 6. In addition, password storage unit 1, update unit 2, position specification unit 3, communication unit 4, ID storage unit 5, display unit 6, touch panel 7, and control unit 8 in communication device 100b are referred to respectively as password storage unit 1b, update unit 2b, position specification unit 3b, communication unit 4b, ID storage unit 5b, display unit 6b, touch panel 7b, and control unit 8b as shown in FIG. 6.

Password storage units 1a and 1b are each assumed to store as passwords the inquiry information *"mountain"* and the response information *"river"* shown in FIG. 2. For example, the user of communication device 100a and the user of communication device 100b decide on a password beforehand, the user of communication device 100a registers this password in password storage unit 1a, and the user of communication device 100b registers this password in password storage unit 1b. The method of registering this password is not limited to the method described above and can be modified as appropriate.

In the interest of simplifying the explanation, FIG. 5 shows only, of the broadcast transmission of the IDs and positional information of communication devices 100a and 100b, the broadcast transmission in communication device 100a, and, of the ID specification operations of the communication partner in communication devices 100a and 100b, only the ID specification operation of the communication partner in communication device 100b.

The operation in which communication device 100b specifies the ID of communication device 100a is next described.

At a time interval of, for example, one minute, control unit 8a reads the most recent ID of communication device 100a from update unit 2a, and moreover, reads the most recent positional information of communication device 100a from position specification unit 3.

Control unit 8a next broadcast transmits the most recent ID of communication device 100a and the most recent positional information of communication device 100a by way of communication unit 4a (Step S501).

In communication device 100b, when control unit 8b receives the most recent ID of communication device 100a and the most recent positional information of communication device 100a by way of communication unit 4b, control unit 8b additionally stores the most recent ID of communication device 100a and the most recent positional information of communication device 100a in ID storage unit 5b (Step S502).

Control unit 8 further additionally stores the most recent ID of communication device 100a and the most recent positional information of communication device 100a together with time information that indicates the current time in ID storage unit 5b. Control unit 8b may generate the time information, or when position specification unit 3b uses GPS, may acquire the time information from GPS.

Control unit 8b next refers to the time information in ID storage unit 5b and deletes, from ID storage unit 5b, IDs and positional information for which a predetermined time interval (for example, 1 minute) has elapsed from being stored in ID storage unit 5b (Step S503).

Control unit 8b next reads the most recent positional information of communication device 100b from position specification unit 3b and reads map information that contains the position indicated by the most recent positional information of communication device 100b from password storage unit 1b.

Control unit 8b then displays a map screen indicated by the map information on display unit 6b. Control unit 8b next reads the positional information from ID storage unit 5b and displays the positional information that was read from ID storage unit 5b and the most recent positional information of communication device 100b on the map screen that is being displayed by display unit 6b (Step S504).

In the present exemplary embodiment, control unit 8b displays its own-device display object at a position on the map screen indicated by the positional information of communication device 100b and displays vicinity-vehicle display objects at positions on the map screen that are indicated by the positional information that was read from ID storage unit 5 (see FIG. 4).

The user of communication device 100b next compares the states of vicinity vehicles that the user of communication device 100b actually checks visually with the map screen that is displayed by display unit 6b, and selects by touching the vicinity-vehicle display object that carries the communication device that is the communication partner from among the vicinity-vehicle display objects on the map screen.

When the vicinity-vehicle display object is touched, touch panel 7b accepts the position of the vicinity-vehicle display object that was designated by touching, as the selected positional information (Step S505). In the following explanation, vicinity-vehicle display object that corresponds to communication device 100a is touched, and the positional information that indicates the position of communication device 100a is accepted as the selected positional information.

Touch panel 7b supplies the selected positional information to control unit 8b.

Upon accepting the selected positional information, control unit 8b creates an ID verification message that includes the inquiry information *"mountain"* in password storage unit 1b while using the ID (ID of communication device 100a) that is placed in association with the selected positional information in ID storage unit 5b to designate communication device 100a as the communication destination (Step S506).

Control unit 8b next transmits the ID verification message addressed to communication device 100a (Step S507).

In communication device 100a, having received the ID verification message by way of communication unit 4a, control unit 8a reads the inquiry information *"mountain"* from the ID verification message.

Control unit 8a then judges whether the inquiry information *"mountain"* is present in password storage unit 1a.

If the inquiry information *"mountain"* is not present in password storage unit 1a, control unit 8a ends the communication that accords with the ID verification message.

On the other hand, if the inquiry information *"mountain"* is present in password storage unit 1 a, control unit 8a reads the response information *"river"* that corresponds to the inquiry information *"mountain"* from password storage unit 1a. FIG. 5 shows the operations when the inquiry information *"mountain"* is present in password storage unit 1 a.

Control unit 8a then creates an acknowledgement message that includes the response information *"river"* (Step S508).

Control unit 8a next transmits the acknowledgement message as a response to the ID verification message to the transmission origin of the ID verification message by way of communication unit 4a (Step S509).

Upon receiving the response to the ID verification message by way of communication unit 4b in communication device 100b, control unit 8b judges whether the response to the ID verification message is an acknowledgement message (Step S510).

In the present exemplary embodiment, if the response information *"river"* is present in the response to the ID verification message, control unit 8b judges that the response to the ID verification message is an acknowledgement message. On the other hand, if the response information *"river"* is not present in the response to the ID verification message, control unit 8b judges that the response to the ID verification message is not an acknowledgement message.

If the response to the ID verification message is an acknowledgement message, control unit 8b specifies the ID that was used for designating the transmission destination of the ID verification message as the ID of the communication partner (Step S511).

On the other hand, if the response to the ID verification message is an acknowledgement message, control unit 8b causes display unit 6b to display a message indicating that the ID of the communication partner cannot be specified (for example, a display showing *"the ID of the communication partner cannot be specified"*)*.*

The effect of the present exemplary embodiment is next described.

According to the present exemplary embodiment, communication unit 4 receives from other communication devices the IDs of the other communication devices and the positional information of the other communication devices. ID storage unit 5 stores the IDs and positional information that were received in communication unit 4 in association with each other in communication device units. Display unit 6 displays the positional information that was received in communication unit 4. Touch panel 7 accepts selected positional information that was selected from among positional information that is displayed on display unit 6. Control unit 8 specifies the ID that is placed in association with the selected positional information in ID storage unit 5 as the ID of the communication partner.

As a result, the user of communication device 100 is able to visually verify the actual position of its communication partner, and based on this verification result, is able to acquire the most recent ID of the communication partner by selecting selected positional information that indicates the actual position of the communication partner from among the positional information that is being displayed.

The above effect is also exhibited by communication device 100 that is made up of communication unit 4, ID storage unit 5, display unit 6, touch panel 7, and control unit 8.

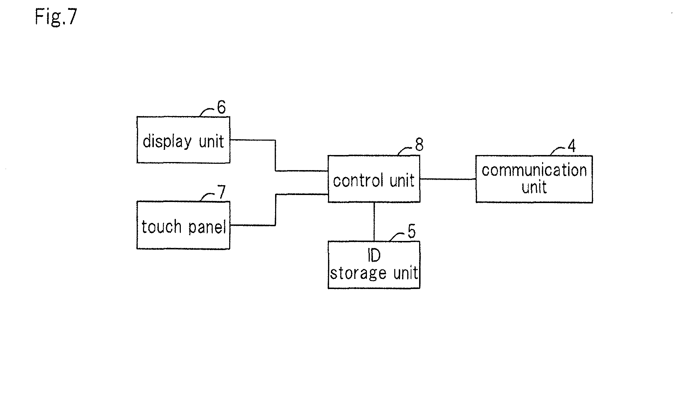

FIG. 7 shows a communication device that is made up of communication unit 4, ID storage unit 5, display unit 6, touch panel 7, and control unit 8.

In the present exemplary embodiment, positional information is used as identification information for visual verification.

As a result, the user of communication device 100 is able to verify the actual position of the communication partner and select selected positional information.

The identification information for visual verification is not limited to positional information and can be modified as appropriate. For example, appearance information that indicates the external appearance of the vehicle (for example, the color or model of the vehicle) in which the other communication device is mounted, movement state information that indicates the state of movement of the other communication device (for example, the direction of movement, the speed of movement, or stopped-vehicle information that indicates whether the car has stopped), or a combination of any two or more of the positional information, appearance information of the vehicle, or movement state information may be used as the identification information for visual verification.

For example, when the appearance information is used as the identification information for visual verification, the user of communication device 100 is able to verify the actual outer appearance of the vehicle that carries the communication partner and select the selected identification information (the selected outer appearance information).

When movement state information is used as identification information for visual verification, the user of communication device 100 is able to check the actual state of movement of the vehicle in which the communication partner is mounted to select the selected identification information (selected movement state information).

In the present exemplary embodiment, the identification information for visual verification is positional information of the communication devices, and display unit 6 displays the positional information of other communication devices on the map screen.

As a result, the display of display unit 6 displays the positional relation between the communication partner and the buildings and roads shown on a map. The user of communication device 100 is therefore able to accurately select positional information that corresponds to its communication partner.

In the present exemplary embodiment, moreover, touch panel 7 is used as the acceptance means, and touch panel 7 accepts as the selected identification information positional information of another communication device that is designated by touching from among the positional information of other communication devices shown on the map screen.

As a result, the user of communication device 100 is able to select as the selected identification information positional information of the communication partner by intuitively touching the positional information of the communication partner that is displayed on a map screen.

The acceptance means is not limited to touch panel 7 and can be modified as appropriate. For example, a microphone that receives selected identification information by voice may be used as the acceptance means.

In the present exemplary embodiment, control unit 8: transmits by way of communication unit 4 an ID verification message in which a communication destination is designated by using the ID that is associated with the selected positional information in ID storage unit 5; and upon receiving by way of communication unit 4 an acknowledgement message that is an acknowledgement as the response to the ID verification message, specifies the ID that is placed in association with the selected positional information in ID storage unit 5 as the ID of the communication partner.

As a result, control unit 8 specifies the ID of the communication partner after acquiring the acknowledgement of the communication partner, whereby mistaken identification of the ID of the communication partner can be prevented.

In the present exemplary embodiment, password storage unit 1 stores response information that corresponds to inquiry information. The ID verification message contains inquiry information in password storage unit 1, and the acknowledgement message contains response information in password storage unit 1.

As a result, even if the ID of a communication partner that recognizes response information that corresponds to inquiry information should change, the new ID of the communication partner can be obtained.

The ID verification message may lack inquiry information in password storage unit 1, and the acknowledgement message may lack response information in password storage unit 1.

In this case, control unit 8 creates an ID verification message that includes the ID of the transmission origin (hereinbelow referred to as a "transmission-origin ID-appended verification message") and transmits the transmission-origin ID-appended verification message.

Control unit 8 in the other communication device that has received the transmission-origin ID-appended verification message causes display unit 6 that is displaying positional information on a map screen to execute display for selecting the positional information of the communication partner (displaying, for example, *"Please select the communication partner"*)*.*

Then control unit 8 in the other communication device, if the ID of the transmission origin that is contained in the transmission-origin ID-appended verification message matches the ID that is placed in association with the selected positional information, transmits to the transmission origin of the transmission-origin ID-appended verification message an acknowledgement message that is an acknowledgement as a response to the transmission-origin ID-appended verification message.

Control unit 8 may specify as the ID of the communication partner the ID that is placed in association with selected positional information in ID storage unit 5 without transmitting an ID verification message. In this case, Steps S506-S510 shown in FIG. 5 are omitted.

In the present exemplary embodiment, update unit 2 updates the ID of communication device 100. Communication unit 4 broadcast-transmits the most recent ID of communication device 100 and the positional information of communication device 100.

As a result, communication device 100 is able to report the most recent ID and positional information of its own device to communication devices in the vicinity.

In the present exemplary embodiment, display unit 6 displays vehicle display objects on a map screen according to positional information, but the method of displaying positional information is not limited to this form and can be modified as appropriate. For example, display unit 6 may display positional information in a list format.

In addition, communication device 100 may be realized by a computer. In this case, the computer reads and executes a program that is recorded on a recording medium such as a CD-ROM (Compact Disk Read Only Memory) that can be read by a computer and thereby functions as password storage unit 1, update unit 2, position specification unit 3, communication unit 4, ID storage unit 5, display unit 6, touch panel 7, and control unit 8. The recording medium is not limited to a CD-ROM and can be modified as appropriate.

In the exemplary embodiment described hereinabove, the configuration shown in the figures is merely an example, and the present invention is not limited to this configuration.

Although the invention of the present application has been described with reference to an exemplary embodiment, the invention of the present application is not limited to the above-described exemplary embodiment. The configuration and details of the invention of the present application are open to various modifications within the scope of the invention of the present application that will be clear to one of ordinary skill in the art. This application claims the benefits of priority based on Japanese Patent Application No. 2012-61664 for which application was submitted on March 19, 2012 and incorporates by citation all of the disclosures of that application.

### Explanation of Reference Numbers

- 100, 100a, 100b: communication device
- 1, 1a, 1b: password storage unit 1
- 2, 2a, 2b: update unit
- 3, 3a, 3b: position specification unit
- 4, 4a, 4b: communication unit
- 5, 5a, 5b: ID storage unit
- 6, 6a, 6b: display unit
- 7, 7a, 7b: touch panel
- 8, 8a, 8b: communication unit

## Claims

1. A communication device comprising:
communication means that receives from each of other communication devices identification information to enable communication with the other communication device and identification information for visual verification of the other communication device;
storage means that stores, for each of the other communication devices, identification information to enable communication and identification information for visual verification, that were received in said communication means, and that are associated with each other;
display means that displays the identification information for visual verification that was received by said communication means;
acceptance means that accepts selected identification information that is a piece of identification information for visual verification that was selected from among pieces of identification information for visual verification that was displayed on said display means; and
control means that specifies, as the identification information to enable communication with a communication partner, identification information to enable communication that is associated with said selected identification information in said storage means.

2. The communication device as set forth in claim 1, wherein the identification information for visual verification of said other communication device is positional information of the other communication device, appearance information of vehicle in which the other communication device is mounted, movement state information that indicates the state of movement of the other communication device, or a combination of two or more of said positional information, said appearance information of vehicle, and said movement state information.

3. The communication device as set forth in claim 1 or 2, wherein:
the identification information for visual verification of said other communication device is positional information of the other communication device; and
said display means displays positional information of each of the other communication devices on a map screen.

4. The communication device as set forth in claim 3, wherein:
said acceptance means is a touch panel; and
said touch panel accepts, as said selected identification information, a piece of positional information of said other communication device that is designated by touching from among pieces of positional information of each of the other communication devices that are displayed on said map screen.

5. The communication device as set forth in any one of claims 1 to 3, wherein said acceptance means accepts said selected identification information by voice.

6. The communication device as set forth in any one of claims 1 to 5, wherein said control means transmits, by way of said communication means, an identification-information-verification message in which a communication destination is designated by using identification information to enable communication that is associated with said selected identification information in said storage means, and upon receiving, by way of said communication means, an acknowledgement message that indicates acknowledgement as a response to the identification-information-verification message, specifies identification information to enable communication that is associated with said selected identification information in said storage means as the identification information to enable communication with said communication partner.

7. The communication device as set forth in claim 6, further comprising:
storing means that stores response information that corresponds to predetermined inquiry information;
wherein said identification-information-verification message includes said predetermined inquiry information, and said acknowledgement message includes said response information.

8. The communication device as set forth in any one of claims 1 to 7, further comprising:
update means that updates identification information to enable communication with its own device;
wherein said communication means broadcast-transmits the most recent identification information to enable communication with its own device and identification information for visual verification of its own device.

9. A method of specifying identification information to enable communication with a communication partner that is carried out by a communication device comprising:
receiving, from each of other communication devices, identification information to enable communication with the other communication device and identification information for visual verification of the other communication device;
storing in storage means for each of the other communication devices, identification information to enable communication and identification information for visual verification, that were received, and that are associated with each other;
displaying the identification information for visual verification that was received;
accepting selected identification information that is a piece of identification information for visual verification that was selected from among pieces of identification information for visual verification that was displayed; and
specifying, as the identification information to enable communication with a communication partner, identification information to enable communication that was associated with said selected identification information in said storage means.

10. A recording medium that can be read by a computer and on which a program is recorded for causing a computer to execute:
a reception procedure of receiving from each of communication devices:
identification information to enable communication with the communication device and identification information for visual verification of the communication device;
a storage procedure of storing, in storage means for each of the communication devices, identification information to enable communication and identification information for visual verification, that were received, and that are associated with each other;
a display procedure of displaying the identification information for visual verification that was received;
an acceptance procedure of accepting selected identification information that is a piece of identification information for visual verification that was selected from among pieces of identification information for visual verification that was displayed; and
a control procedure of specifying, as the identification information to enable communication with a communication partner, identification information to enable communication that was associated with said selected identification information in said storage means.
